# FASCICULE DE BREVET EUROPEEN

(11) **EP 2 816 009 B1**
(45) Date de publication et mention de la délivrance du brevet: **24.02.2016**
(21) Numéro de dépôt: 14168469.6
(22) Date de dépôt: 15.05.2014
(51) Int. Cl.: C01B 3/36, C01B 3/38, C01B 3/48

(54) **Procédé utilisant la chaleur fatale d'une installation de production d'hydrogène pour alimenter les réseaux de chaleur urbains en chaleur verte**
Verfahren, das die Abwärme einer Wasserstofferzeugungsanlage zur Versorgung städtischer Fernwärmenetze mit grüner Wärme nutzt
Method using the free heat from a hydrogen production facility to supply district heating networks with green heat

(30) Priorité: 20.06.2013 FR 1355839
(43) Date de publication de la demande: 24.12.2014
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Tromeur, Pascal, 69140 RILLIEUX-LA-PAPE (FR)
(74) Mandataire: Conan, Philippe Claude

(56) Documents cités:
- WO-A1-2008/147860
- WO-A2-2009/057939
- US-A1- 2009 230 359
- US-A1- 2012 256 132
- J. SWITHENBANK, K. FINNEY, QUN CHEN, YAO BIN YANG, ANDY NOLAN, VIDA N. SHARIFI: "Waste heat usage", APPLIED THERMAL ENGINEERING, 29 octobre 2012 (2012-10-29), pages 430-440, XP002718866,

## Description

La présente invention concerne un procédé de récupération de chaleur fatale à partir d'une installation de production d'hydrogène pour alimenter les réseaux de chaleur urbains en chaleur verte.

Plus précisément, elle concerne un procédé d'utilisation de chaleur disponible à une température comprise entre 25°C et 170°C et provenant d'un procédé PH2 de production d'hydrogène par reformage à la vapeur d'hydrocarbures légers pour contribuer au chauffage de l'eau d'un réseau d'eau de chauffage collectif, dans lequel le procédé PH2 génère un gaz de synthèse à très haute température par reformage à la vapeur des hydrocarbures avec production conjointe de fumées, suivi d'un premier refroidissement du gaz de synthèse par échange de chaleur, puis d'une conversion de CO contenu dans le gaz de synthèse, d'un second refroidissement par échange de chaleur ; les fumées produites par le procédé PH2 lors du reformage sont refroidies lors d'échanges de chaleur successifs avec différents fluides utilisés dans le procédé, et de la vapeur fatale est produite pour alimenter un réseau de vapeur extérieur à partir d'eau déminéralisée par échanges de chaleur avec le gaz de synthèse et optionnellement avec les fumées.

La technologie du reformage à la vapeur de méthane ou vapo reformage (steam methane reforming ou SMR en langue anglaise) est communément utilisée pour produire de l'hydrogène industriellement. L'obtention de gaz de synthèse constitue la première étape essentielle en vue de la production finale d'hydrogène ; sa composition peut varier en fonction des conditions, mais il sera toujours constitué principalement d'un mélange d'hydrogène et de monoxyde de carbone, ainsi que en proportions moindres de dioxyde de carbone, de méthane n'ayant pas réagi, de vapeur d'eau en excès ainsi que de composés divers très minoritaires y compris à l'état de traces.

Dans le cadre d'une production d'hydrogène, le gaz de synthèse résultant du vapo reformage est traité dans au moins un réacteur dit de shift dans lequel le monoxyde de carbone (CO) produit lors du reformage est, sous l'action de vapeur d'eau et en présence d'un catalyseur approprié, essentiellement transformé en hydrogène supplémentaire et en dioxyde de carbone.

La réaction de reformage fortement endothermique se produit à température élevée (de 550°C à 950°C). La chaleur nécessaire à la réaction de reformage est fournie par la combustion de gaz combustible - gaz naturel d'alimentation et gaz résiduaire du procédé (en général un gaz résiduaire de PSA) essentiellement - avec de l'air dans la zone de combustion produisant ainsi des fumées. Le gaz de synthèse en sortie de reformage est à une température élevée (800°C à 950°C). Une partie de la chaleur disponible dans ce gaz de synthèse à température élevée, ainsi que dans les fumées est utilisée pour chauffer de l'eau de chaudière afin de produire au moins la vapeur nécessaire à la réaction de reformage, un excès de vapeur pouvant être exporté.

Le document US 2009/0230359 A1 décrit un procédé de reformage à la vapeur dans lequel la chaleur disponible dans le gaz de synthèse et dans les fumées est utilisée pour chauffer des fluides utilisés dans le procédé.

Le syngas sortant du reformeur subit donc un premier refroidissement - la chaleur récupérée étant utilisée pour la production de vapeur-, puis est envoyé au module dit « de shift » constitué de un ou plusieurs réacteur(s), et aussi identifié en tant que module ou réacteur WGS (abréviation de l'expression anglaise water gas shift) pour produire de l'hydrogène additionnel à partir de la conversion - en présence de vapeur- du CO en CO₂. Le syngas enrichi en H₂ et CO₂ (et appauvri en CO) est traité par adsorption à pression modulée dans une unité dite « unité PSA H₂ » pour produire de l'hydrogène.

Un second aspect des unités actuelles de production d'hydrogène est qu'elles présentent une intégration énergétique poussée favorisant l'utilisation de la chaleur disponible dans les fluides chauds de l'unité pour la production de vapeur, la préchauffe de réactifs ou la préchauffe d'air.

Le gaz de synthèse sortant du reformeur est refroidi jusqu'à une température permettant son entrée dans un réacteur de shift, le gaz de synthèse sortant du réacteur de shift est refroidi de nouveau ; à noter que lorsque le module de shift comprend un réacteur haute température suivi d'un réacteur basse température, le second refroidissement se situe entre les deux réactions de shift. Suite à ce second refroidissement, le gaz de synthèse se présente sous la forme d'un fluide biphasique, à une température de l'ordre de 90 à 160°C sous une pression de l'ordre de 18 à 40 bar. Les condensats en résultant, essentiellement de l'eau, mais aussi des gaz dissous peuvent être récupérés et réutilisés pour produire de la vapeur par récupération de chaleur provenant du procédé. Tout ou partie de la vapeur ainsi produite, dite vapeur de procédé (process steam en langue anglaise) est mélangée avec la charge destinée à produire le gaz de synthèse dans le reformeur.

Les gaz de combustion du reformage constituent un autre fluide chaud disponible sur site. En sortie de la chambre de combustion, leur température est comprise entre 900 et 1200 °C, ils sont alors refroidis dans la zone de convection lors d'échanges de chaleur successifs avec différents fluides utilisés dans le procédé (hydrodésulfuration, préreformage, reformage, etc) ainsi que pour la production de vapeur. La chaleur disponible aux températures supérieures à 170°C environ est ainsi réutilisée sur le site de l'installation, soit pour la production de vapeur - pour le procédé et en cas de demande pour produire de la vapeur d'exportation-, pour la préchauffe de réactifs, y compris la préchauffe d'air de combustion.

Cependant, l'énergie disponible à plus basse température (inférieure à 170°C) reste généralement sans utilisation. Il s'agit principalement d'énergie disponible dans les fluides décrits ci-avant: (1) le gaz de synthèse en sortie de module de shift et (2) les fumées en sortie de préchauffeur d'air de combustion, qui sont dirigées vers la cheminée.

Selon les unités, la quantité d'énergie encore disponible dans ces fluides est de l'ordre de 2 à 20MWth correspondant à des unités de production de 10 000 Nm³/h H₂ à 100 000 Nm³/h H₂. Cette énergie est à l'heure actuelle évacuée - et donc perdue-, en utilisant en général l'une ou plusieurs des solutions suivantes :
- émission directe des fumées (à des températures de 120 à 170°C),
- échange de chaleur contre l'air ambiant dans des aéroréfrigérants, et/ou
- échange de chaleur contre de l'eau de refroidissement qui sera elle-même soit renvoyée directement dans le milieu naturel (avec prise en compte des contraintes de température), soit refroidie contre l'air ambiant dans des tours de réfrigération.

Dans le même temps, dans le monde entier, les grandes villes dont les réseaux de chaleur urbains centralisent la production et la distribution de chaleur pour les habitants sont partout à la recherche de «chaleur verte » compétitive - par chaleur verte, il faut comprendre une chaleur dont l'empreinte carbone est plus faible que celle de la chaleur produite à partir du gaz naturel- afin d'accompagner les engagements locaux et nationaux en matière de lutte contre le réchauffement climatique.

Les réseaux de chaleur urbains connaissent un fort développement et s'orientent souvent vers des combustibles renouvelables (principalement bois et déchets) pour atteindre leurs objectifs. Or, si leur utilisation en tant que combustible permet un coût variable (OPEX) de l'énergie très compétitif (entre 20 et 30€/MWh), elle nécessite cependant un coût d'investissement (CAPEX) élevé (CAPEX de l'ordre de 1M€ par MW de puissance installée) et donne lieu à des émissions d'oxydes d'azote (NOx) et de poussières importantes par rapport aux chaudières au gaz, et ceci malgré l'implémentation progressive des meilleures technologies de traitement des fumées disponibles sur le marché.

Ainsi, si l'utilisation du bois (ou plus généralement de la biomasse) est une réponse adaptée au problème du remplacement du carbone fossile par une énergie renouvelable, il reste que ce n'est pas pour autant une très bonne réponse au problème plus global de pollution.

L'article "Waste heat usage", J. Swithenbank, K. Finney, Qun Chen, Yao BinYang, Andy Nolan, Vida N. Sharifi: Applied Thermal Engineering (2012-10-29), pages 430-440, décrit l'utilisation de la chaleur résiduelle des procédés industriels en général dans les réseaux de chaleur urbaines.

En outre, une autre préoccupation majeure liée à l'utilisation des réseaux urbains étant celle de la maîtrise des coûts de l'énergie, afin de réduire leur exposition à l'évolution des prix du gaz et du pétrole, les collectivités en charge de ces réseaux urbains cherchent à diversifier les sources de chaleur.

Il existe donc :
- un besoin constant d'amélioration de la fourniture de chaleur aux réseaux urbains sous forme d'une alternative énergétique, ou simplement d'un complément énergétique ; la solution doit être économiquement intéressante et non polluante,
- tandis que les installations de production d'hydrogène disposent d'une source de « chaleur fatale » qui n'est en général pas valorisable au niveau de l'installation et alors que l'exploitant de l'installation n'est pas incité à valoriser cette chaleur à l'extérieur de l'installation.

Partant de là, deux problèmes se posent :
- trouver à utiliser la chaleur fatale d'une installation de production d'hydrogène,
- trouver une source de chaleur complémentaire fiable pour des réseaux d'eau chaude de type urbains.

Un objet de l'invention est de proposer à l'exploitant du réseau de chaleur urbain une solution d'approvisionnement en chaleur alternative et/ ou complémentaire aux sources de chaleur dont il dispose.

Un second objet de l'invention est de proposer à l'exploitant d'une installation de production d'hydrogène une solution pour améliorer la valorisation de la chaleur fatale de son installation, dès lors qu'elle est située à proximité d'une zone urbaine utilisant un réseau d'eau chaude.

La solution de l'invention consiste à capter l'énergie fatale d'installations de production d'hydrogène pour la transférer aux réseaux d'au chaude proches. Pour cela, le procédé de l'invention fait appel à une boucle intermédiaire véhiculant un fluide caloporteur chaud, avantageusement de l'eau chaude sous pression, réalisant ainsi l'intégration thermique d'une installation de production d'hydrogène industrielle avec un réseau d'eau chaude situé à proximité de l'installation.

L'investissement requis -notamment le coût des canalisations pour le transport d'eau chaude- doit être compétitif par rapport à l'investissement d'une chaudière à gaz dédiée ; la distance maximale entre l'installation de production d'hydrogène et le réseau urbain peut ainsi être estimée à 10km, de préférence la distance entre l'installation H₂ et le réseau sera de 5 km ou moins.

Ce transfert de chaleur entre une installation de production d'hydrogène et un / ou des réseaux de chaleur urbain situés à proximité présente en outre les avantages suivants ; son utilisation est :
- sure (pas de risque pour les industriels ou les usagers),
- fiable (énergie disponible en permanence et à 100% pour les réseaux urbains),
- efficace (ratio Energie transférée / Energie disponible élevé),
- flexible (permet de faire face à la saisonnalité de la demande en chaleur),
- peu chère (non indexée sur le pétrole et indexée seulement partiellement sur le prix du gaz naturel).

Il en résulte pour l'usager final une chaleur disponible verte, flexible et qui se substitue ainsi avantageusement à des sources existantes d'énergie fossile.

L'invention concerne ainsi un procédé P d'utilisation de chaleur disponible à une température inférieure à 170°C provenant d'un procédé PH2 de production d'hydrogène par reformage à la vapeur d'hydrocarbures légers pour contribuer au chauffage de l'eau d'un réseau d'eau de chauffage collectif, dans lequel :
- le procédé PH2 comprend au moins des étapes de :
   h1) génération d'un gaz de synthèse par reformage à la vapeur avec production conjointe de fumées, suivi d'au moins un premier refroidissement du gaz de synthèse par échange de chaleur, puis d'une conversion de CO contenu dans le gaz de synthèse, puis d'un second refroidissement par échange de chaleur jusqu'à une température TG au plus égale à 160°C,
   h2) refroidissement des fumées produites par échanges de chaleur successifs avec différents fluides utilisés dans le procédé jusqu'à une température TF au plus égale à 170°C,
   h3) production de vapeur fatale d'exportation pour alimenter un réseau de vapeur extérieur à partir d'eau déminéralisée par échanges de chaleur avec le gaz de synthèse et optionnellement avec les fumées, à une température TV supérieure à 200°C.
- le procédé P d'utilisation de chaleur étant caractérisé en ce que qu'il comprend au moins les étapes de :
   a) mise à disposition d'un réseau d'eau de chauffage collectif dans lequel circule une eau à température variable comprise entre **Tt** au moins égale à 50°C (valeur eau tiède) et **Tc** au plus égale à 180°C (valeur eau chaude),
   b) mise à disposition de fluide caloporteur à température variable comprise entre **Tmin** supérieure à **Tt** et **Tmax** supérieure à **Tc** circulant dans une boucle fermée,
   c) chauffage de tout ou partie du fluide caloporteur par échange de chaleur indirect avec le gaz de synthèse après le second refroidissment à la température **TG** lors de l'étape h1),
   d) chauffage de tout ou partie du fluide caloporteur par échange de chaleur avec de la vapeur prélevée sur la vapeur fatale d'exportation produite par l'étape h3) à la température **TV** de sorte à fournir un fluide caloporteur à une température de l'ordre de **Tmax,**
   e) transfert de chaleur du fluide caloporteur à la température **Tmax** vers le réseau d'eau de chauffage collectif par échange de chaleur indirect avec l'eau dudit réseau à la température **Tt** via un échangeur de sous-station de sorte à chauffer l'eau du réseau jusqu'à la température **Tc.**

La température **Tc** est fixée, c'est une consigne imposée par les utilisateurs du réseau urbain, selon la conception du réseau et ses besoins. La température **Tmax** est ajustée et contrôlée par le procédé pour assurer que **Tc** atteigne le niveau requis. Le débit de vapeur mis en oeuvre à l'étape d) est adapté et contrôlé pour fournir la chaleur nécessaire pour maintenir **Tmax** au niveau requis.

L'invention permet ainsi de capter l'énergie fatale des installations de production d'hydrogène -habituellement perdue car insuffisante pour des usages autres que domestiques et de ce fait non utilisée sur l'installation- pour la transférer aux réseaux d'eau chaude urbains qui sont demandeurs de sources de chaleur dans cette gamme de température réalisant ainsi une intégration thermique entre une installation de production d'hydrogène industrielle et un réseau d'eau chaude urbain situé à proximité de l'installation, c'est-à-dire à moins de dix kilomètres, de préférence à moins de cinq kilomètres.

Ce transfert de chaleur entre une installation de production d'hydrogène et un réseau de chaleur urbaine situé à proximité présente ainsi que rapporté ci-dessus les avantages de sécurité, fiabilité, efficacité, flexibilité et coût modéré.

Conformément à d'autres caractéristiques avantageuses de l'invention, celle-ci peut présenter au moins l'une des variantes ci-après :
- le procédé comprend une étape de chauffage d'au moins une partie du fluide caloporteur par échange de chaleur indirect avec les fumées à la température **TF,**
- le réseau d'eau chaude est un réseau de chauffage urbain, l'échangeur de sous-station transférant la chaleur depuis la boucle fermée vers l'eau du réseau urbain ou l'eau d'un sous-ensemble de ce réseau urbain,
- en cas d'arrêt du procédé PH2 de production d'hydrogène, la vapeur utilisée lors de l'étape (d) provient d'un réseau de vapeur externe relié au circuit de production de vapeur de l'installation,
- un fluide caloporteur préféré est de l'eau,
- le refroidissement du gaz de synthèse - en sortie du module de shift - est assuré pour partie au moyen d'un aero-réfrigérant et pour partie au moyen d'un échangeur à eau installé en amont ou en parallèle de l'aéro-réfrigérant et assurant le chauffage du fluide caloporteur selon l'étape c),
- l'étape c) utilise un échangeur à eau qui opère à l'eau pressurisée à une pression supérieure à 6 bar et préférentiellement supérieure à 10bar,
- le fluide caloporteur circulant dans la boucle fermée est à une pression supérieure à la pression du gaz de synthèse (mesurée à l'entrée de l'échangeur de chaleur de l'étape c).

Selon un second aspect de l'invention, celle-ci concerne une installation pour l'utilisation de chaleur disponible à partir d'une installation de production d'hydrogène par reformage à la vapeur d'hydrocarbures légers pour contribuer au chauffage de l'eau d'un réseau d'eau de chauffage collectif, dans laquelle:
- l'installation de production d'hydrogène comprend au moins:
   - un module de génération de gaz de synthèse par reformage à la vapeur avec production conjointe de fumées, ainsi que
   - un module de refroidissement du gaz de synthèse par échange de chaleur,
   - un module de conversion de CO contenu dans le gaz de synthèse,
   - un second module de refroidissement par échange de chaleur jusqu'à une température **TG** au plus égale à 160°C,
   - des échangeurs de chaleur pour le refroidissement des fumées par échanges de chaleur successifs avec différents fluides utilisés dans le procédé jusqu'à une température **TF** au plus égale à 170°C,
   - une source d'eau déminéralisée pour la production de vapeur d'exportation pour l'alimentation d'un réseau de vapeur extérieur,
   - des échangeurs de chaleur aptes à échanger de la chaleur avec le gaz de synthèse et avec les fumées pour la production de vapeur à une température **TV** supérieure à 200°C,
- ladite installation pour l'utilisation de chaleur comprenant au moins:
   - un réseau d'eau de chauffage collectif dans lequel circule une eau à température variable comprise entre **Tt** au moins égale à 50°C (valeur eau tiède) et **Tc** au plus égale à 180°C (valeur eau chaude),
   - une boucle fermée dans laquelle circule un fluide caloporteur à température variable comprise entre **Tmin** supérieure à **Tt** et **Tmax** supérieure à **Tc,**
   - un échangeur de chaleur pour le chauffage de tout ou partie du fluide caloporteur par échange de chaleur indirect avec le gaz de synthèse à la température **TG,**
   - un échangeur de chaleur pour le chauffage de tout ou partie du fluide caloporteur par échange de chaleur indirect avec de la vapeur prélevée sur la vapeur d'exportation de sorte à fournir un fluide caloporteur à la température **Tmax,**
   - une sous station équipée d'un échangeur de chaleur indirect station pour le chauffage de l'eau du réseau d'eau de chauffage collectif jusqu'à la température **Tc** par échange de chaleur indirect avec le fluide caloporteur à la température **Tmax.**

Conformément à d'autres caractéristiques avantageuses de l'invention, l'installation peut présenter au moins l'une des variantes ci-après :
- l'installation comprend en outre un échangeur de chaleur pour le chauffage d'au moins une partie du fluide caloporteur par échange de chaleur indirect avec les fumées à la température **TF ;**
- le réseau d'eau de chauffage collectif est un réseau de chauffage urbain, l'échangeur de sous-station transférant la chaleur depuis la boucle fermée vers l'eau du réseau urbain ou d'un sous-ensemble de ce réseau;
- l'installation est équipée d'une canalisation et de moyens aptes assurer l'alimentation en vapeur de l'étape (d) à partir d'un réseau de vapeur relié au circuit de production de vapeur de l'installation de production d'hydrogène en cas d'arrêt de celle-ci;
- le fluide caloporteur circulant dans la boucle fermée est de l'eau ;
- l'installation est équipée pour le refroidissement du gaz de synthèse en sortie du module de shift d'un aero-réfrigérant et d'un échangeur à eau installé en amont ou en parallèle de l'aéroréfrigérant et assurant le chauffage du fluide caloporteur.

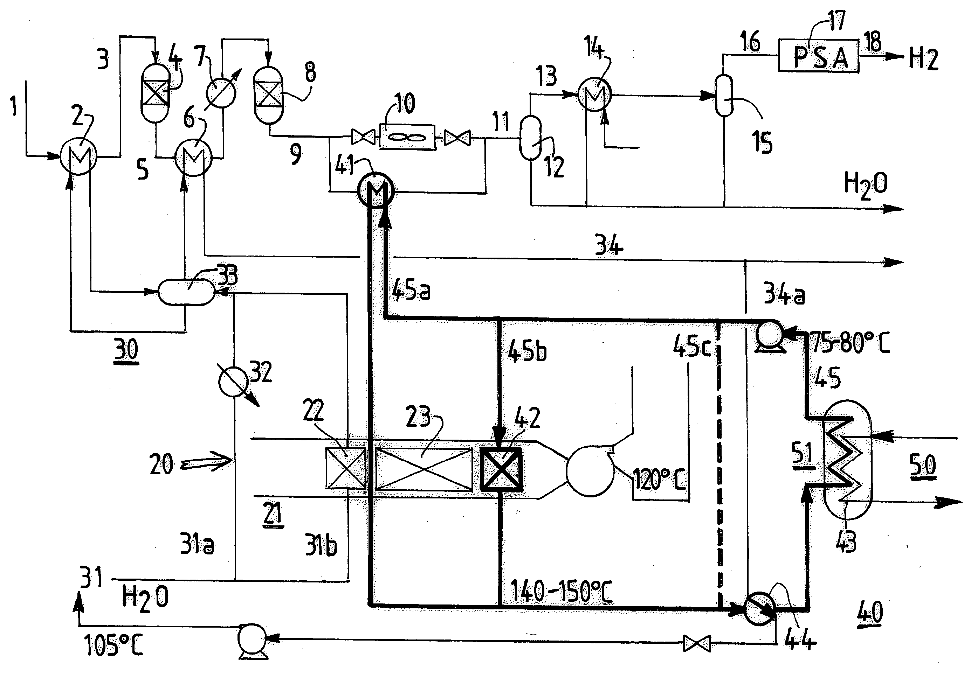

D'autres caractéristiques et avantages de la présente invention apparaîtront à la lecture de la description détaillée ci-après, d'un exemple de mise en oeuvre non limitatif, faite en référence à la figure unique annexée.

La figure unique présente un exemple d'installation de production d'hydrogène adaptée de sorte à fournir de la chaleur fatale générée lors de la production d'hydrogène à un réseau de chaleur urbain au moyen de l'implantation d'une boucle de circulation d'eau chaude entre l'installation de production d'H₂ et le réseau urbain de chaleur, fournissant ainsi de la chaleur verte au réseau urbain.

Le schéma de la figure ne reproduit qu'une partie des éléments composant une installation de production d'hydrogène, seuls ceux qui sont utiles à la compréhension de l'invention sont reproduits ; on s'est en particulier abstenu de représenter certains échangeurs de chaleur qui ne participent pas à l'invention. Afin de faciliter la compréhension de la figure, on s'est aussi abstenu d'indiquer certains compresseurs, vannes, ainsi que des éléments de liaison, de contrôle qui sont connus de l'homme du métier et alourdiraient inutilement le schéma.

Selon le procédé de l'invention tel que reproduit par la figure, le gaz de synthèse **1** quitte le reformeur à température élevée et sous pression, il est refroidi contre de la vapeur en **2,** le gaz de synthèse ainsi refroidi **3** passe dans un réacteur (HT) de shift haute température **4,** le gaz shifté **5** est de nouveau refroidi en **6,** puis en **7** l'ensemble des deux refroidissements **6** et **7** constituant le **second** refroidissement selon l'invention; à noter aussi que selon cet exemple, le gaz de synthèse refroidi est ici shifté de nouveau dans un réacteur (BT) de shift à basse température en **8 ;** le gaz de synthèse **9** quittant le module de shift est à une température **TG** de l'ordre de 145°C. La chaleur encore présente dans le gaz de synthèse **9** constitue ainsi une première partie - la plus importante- de la chaleur fatale de l'installation d'hydrogène.

De façon classique, la température du gaz de synthèse est alors abaissée par passage dans des aéroréfrigérants **10** permettant ainsi d'obtenir un gaz de synthèse **11** à une température de l'ordre de 80 à 85°C. Le gaz de synthèse contient des condensats qui en **12** sont séparés d'avec le gaz de synthèse sec **13** (c'est-à-dire débarrassé de l'eau liquide qu'il contenait). Le gaz de synthèse sec **13** est refroidi une dernière fois en **14** contre de l'eau de refroidissement brute (environ 20°C), de nouveaux condensats sont ainsi obtenus qui sont séparés en **15,** le nouveau gaz de synthèse sec **16** (25°C, 18 à 30bar environ) est alors envoyé à l'unité **17** PSA H₂ pour produire de l'hydrogène **18.** Les condensats récupérés au niveau des séparateurs **12** et **15** sont rassemblés avec l'eau de refroidissement réchauffée en **14** et sont rejetés.

Les fumées **20** produites lors de la combustion dans le four du reformeur sont évacuées via la zone de convection **21** après plusieurs échanges thermiques non réprésentés; les fumées **20** passent par l'échangeur de chaleur **22** où elles fournissent de la chaleur à de l'eau dégazée provenant au moins en partie d'une source extérieure d'eau déminéralisée **31** et destinée à alimenter le circuit de production de vapeur **30** associé à l'installation de production d'hydrogène. Les fumées partiellement refroidies par le passage dans le premier échangeur de chaleur **22** passent ensuite dans l'échangeur **23** où elles préchauffent de l'air de combustion. En sortie du préchauffeur d'air **23,** les fumées sont à une température **TF** de l'ordre de **150 à 170°C.** Elles représentent la seconde source de chaleur fatale de l'installation de production d'hydrogène.

La partie de l'installation de production d'hydrogène telle que décrite ci-avant obéit à un schéma classique connu.

L'installation de la figure comprend les éléments additionnels - selon l'invention- tels que décrits ci-après ; ces éléments additionnels - propres à l'invention- assurent, en combinaison avec les éléments déjà décrits, la mise en oeuvre du procédé de l'invention. Il s'agit essentiellement d'une boucle fermée véhiculant de l'eau sous pression en tant que fluide caloporteur qui se réchauffe dans le procédé de production d'H₂ et qui se refroidit au niveau d'un échangeur indirect de chaleur -dit de sous station- contre de l'eau moins chaude d'un circuit d'eau urbain.

Plus précisément, une boucle d'eau chaude **40** (en traits épais sur la figure) est ajoutée, dans laquelle de l'eau sous pression **45** circule en circuit fermé, une première partie **45a** de l'eau circulant - la plus importante- récupère sur le gaz de synthèse **9** après le shift **8** une partie de la chaleur fatale de l'unité de production d'hydrogène, au niveau d'un échangeur **41** installé sur le syngas en parallèle par rapport à l'aéroréfrigérant **10.** Selon d'autres variantes, l'échangeur et le réfrigérant peuvent être en série. Une deuxième partie de la chaleur fatale de l'unité de production d'hydrogène est récupérée sur les fumées au niveau de l'échangeur **42** dans la zone de convection. Ces deux sources de chaleur - récupérée sur la chaleur fatale de l'unité de production d'hydrogène - forment la base de l'apport de chaleur verte au circuit urbain associé **50.** Afin de donner une flexibilité avantageuse au système, un troisième échangeur **44** est ajouté sur la boucle d'eau chaude **40.** L'échangeur **44** prélève une partie de la chaleur disponible dans le circuit **30** de vapeur, au niveau de la partie **34** de la vapeur fatale exportée de l'unité. Cet échangeur **44** permet d'ajuster la température **Tmax** au niveau requis. Le fonctionnement du circuit **30** de vapeur est décrit plus loin.

La boucle d'eau chaude comporte en outre une canalisation **45c** (ligne discontinue sur la figure) qui permet -en cas d'arrêt de la production de vapeur fatale par l'installation- de court-circuiter les échangeurs **41** et **42** et d'assurer via l'échangeur de chaleur **44** la totalité du chauffage de l'eau de la boucle entrant dans l'échangeur de chaleur **43 ;** dans ce cas, c'est le réseau de vapeur externe qui fournit la vapeur de chauffage à l'échangeur ;

La chaleur prélevée sur l'installation -ou sur le circuit de vapeur extérieur en cas de défaillance dans la fourniture de chaleur par l'installation- est transférée au circuit **50** d'eau chaude urbain associé au niveau de l'échangeur **43** situé au niveau d'une sous-station **51** du réseau urbain **50.** Cette sous-station **51** est reliée au réseau urbain **50** par des canalisations transportant l'eau réchauffée de la sous-station vers le réseau urbain et l'eau à réchauffer du réseau urbain vers l'échangeur **43** de la sous station.

Le circuit **30** de production de vapeur associé à l'unité de production d'hydrogène fonctionne de la manière suivante : l'eau dégazée sous pression **31** (environ 45bar) est préchauffée -pour sa partie **31a** en **32** et pour sa partie **31 b** contre les fumées via l'échangeur **22**- puis alimente le ballon de chaudière **33.** Le ballon de chaudière **33** est en équilibre avec le générateur de vapeur **2.** La phase vapeur du ballon **33** constitue la vapeur saturée qui est ensuite surchauffée en **6** à une température de 300°C. Elle est utilisée, pour partie (non représentée), dans l'installation de production d'hydrogène, et pour partie est exportée sous forme de vapeur fatale **34.** Une fraction **34a** de la vapeur (disponible à 45bar, 300°C) est prélevée sur la vapeur fatale avant exportation et passe dans l'échangeur **44** où elle transfère de sa chaleur à l'eau de la boucle **40.** La fraction **34a** alimentant l'échangeur **44** est ajustée en fonction de la disponibilité des deux sources de chaleur fatale (fumées et gaz de synthèse) de sorte à satisfaire les besoins du réseau.

La vapeur **34a**, après refroidissement en **44** contre l'eau de la boucle d'eau chaude est condensée. Elle est renvoyée vers le circuit de production de vapeur **30** - soit dans l'eau alimentant le dégazeur (non représenté) qui fournit l'eau dégazée **31,** soit après pompage, directement dans l'eau dégazée alimentant le ballon **33.**

Un exemple de mise en oeuvre d'une installation telle que représentée sur la figure est présenté ci-après :
- l'installation est apte à produire jusqu'à 14 000 Nm³/h d'hydrogène, elle dispose dans ce cas d'au moins 2MW de chaleur fatale récupérable sur le gaz de synthèse et de 0.5MW récupérables sur les fumées - variable selon la production effective d'hydrogène. Elle dispose aussi de jusqu'à 6MW de complément de chaleur disponible dans la vapeur à 45bar.
- la sous-station **51** est apte à produire 8MW,
- le réseau urbain fait circuler une eau à température variable, comprise entre 70°C et 160°C,
- la boucle fermée de fluide caloporteur contient de l'eau à une température de l'ordre de 75°C en sortie de la sous -station et 165°C à son entrée dans la sous-station,
- le gaz de synthèse en sortie du reformeur est à une pression comprise entre 20 et 30 bar et à une température de l'ordre de 850°C ; il est refroidi par échange de chaleur avec de l'eau dégazée en **32,** puis en **2** jusqu'à une température de 350°C pour entrer dans le réacteur de shift HT **4,** puis à la sortie du réacteur **4,** il est refroidi en **6** puis en **7** jusqu'à une température de 145°C environ, puis passe dans le réacteur de shift basse température **8,** le gaz de synthèse **9** est alors à une température comprise entre 140°C et 160°C environ. ; la chaleur fatale contenue dans le gaz de synthèse est transférée via l'échangeur **41** à l'eau de la boucle d'eau chaude **40,** à ce point, le syngas **11** se présente sous la forme d'un fluide biphasique à une température comprise entre 75 et 85°C et à une pression de 18 à 30 bars,
- l'eau **45** circulant dans la boucle **40** présente une température minimale - observée après refroidissement par passage dans l'échangeur **43** et transfert de chaleur à l'eau du réseau urbain **50-** supérieure à la température minimale du réseau urbain ; cette température minimale de l'eau de la boucle **40** est de l'ordre de 75 à 80°C ; l'eau de la boucle est ensuite réchauffée de la manière suivante : une partie **45a** de l'eau -soit 75% environ de l'eau circulant dans la boucle passe dans l'échangeur **41** où elle est réchauffée jusqu'à une température de l'ordre de 130°C, une partie **45b** - environ 20%- de l'eau est envoyée dans l'échangeur **42** où elle est chauffée contre les fumées jusqu'à une température de l'ordre de 140 à 150°C, le complément, **45c** soit environ 5% de l'eau circulant dans la boucle est - pour des besoins de secours et/ou de régulation - envoyé directement à l'échangeur **44 ;** l'échangeur **44** assure aussi le chauffage complémentaire des fractions **45a** et **45b,** les trois fractions **45a, 45b** et **45c** sont rassemblées à cet effet et le chauffage complémentaire est réalisé au niveau de l'échangeur **44** contre la vapeur **34a** disponible à 45bar, 300°C portant ainsi la température de l'eau de la boucle **45** à 165°C. Via l'ensemble des échangeurs **41, 42, 44,** la boucle fermée dispose ainsi de 4 à 8 MW à transférer au réseau urbain de chauffage via la sous-station **51.**

Afin de pouvoir utiliser la vapeur export fatale **34a** non seulement comme complément de chauffage, mais comme chauffage de substitution en cas de défaillance de l'installation, l'échangeur **44** est dimensionné de sorte qu'en cas d'arrêt de production d'hydrogène, le chauffage de l'eau de la boucle peut être assuré par la vapeur seule, provenant de l'installation elle-même en cas d'arrêt de courte durée, ou importée à partir du réseau vapeur du site (en provenance d'installations voisines) en cas d'arrêt prolongé. Ainsi, le réseau urbain est assuré de la fiabilité de cette fourniture de chaleur verte.

De plus, afin d'être assuré qu'en cas de fuite au niveau de l'échangeur **41,** du gaz de synthèse - toxique pour le réseau- ne pourra pas s'introduire dans le réseau via la boucle d'eau chaude, la pression de l'eau dans la boucle est avantageusement maintenue en tout point strictement supérieure à la pression du gaz de synthèse ; la pression de l'eau dans la boucle sera supérieure d'au moins un bar à la pression du gaz de synthèse au niveau de l'échangeur **41** de sorte à, grâce à cette pression supérieure, prévenir toute entrée intempestive de gaz de synthèse sous pression.

Les deux sources de chaleur fatale constituées par l'énergie contenue dans le gaz de synthèse en sortie de réaction de shift basse température et dans les fumées en aval de l'échangeur de préchauffe d'air offrent une chaleur habituellement perdue dans sa totalité et dont le coût de récupération est limité au coût du capital investi plus le coût de maintenance, mais sans coût de l'énergie.

Si son inconvénient est sa dépendance à la production d'hydrogène, il faut cependant considérer qu'en même temps qu'elles produisent du gaz de synthèse, la grande majorité des unités de production d'hydrogène produit plus de vapeur qu'elles n'en consomment pour les besoins des réactions de reformage et de shift ; elles exportent donc en général de la vapeur (surchauffée et sous pression) vers le réseau vapeur du site.

L'utilisation de vapeur d'exportation comme source additionnelle de chauffage dans la boucle d'eau chaude selon l'invention est facile à contrôler en quantité et en température.

Outre qu'elle fournit un complément de chaleur flexible en fonctionnement normal qui s'adapte à la demande (complément important en hiver, apport limité en été), elle constitue une source de chaleur de secours qui sécurise l'apport de chaleur par l'installation de production d'hydrogène.. La pression de la vapeur dans le réseau vapeur du site y est en effet maintenue par d'autres producteurs de vapeur du site (chaudière, cogénération, cycle combiné, etc...) et le réseau vapeur est ainsi en mesure de se substituer à la vapeur export de l'installation pour fournir la chaleur nécessaire pour chauffer l'eau de la boucle et assurer ainsi la continuité de la fourniture de chaleur au réseau urbain associé.

## Revendications

1. Procédé P d'utilisation de chaleur disponible à une température inférieure à 170°C provenant d'un procédé PH2 de production d'hydrogène par reformage à la vapeur d'hydrocarbures légers pour contribuer au chauffage de l'eau d'un réseau d'eau de chauffage collectif, dans lequel :
- le procédé PH2 comprend au moins des étapes de :
h1) génération d'un gaz de synthèse par reformage à la vapeur avec production conjointe de fumées, suivi d'un premier refroidissement du gaz de synthèse par échange de chaleur, puis d'une conversion de CO contenu dans le gaz de synthèse, d'un second refroidissement par échange de chaleur jusqu'à une température **TG** au plus égale à 160°C,
h2) refroidissement des fumées produites par échanges de chaleur successifs avec différents fluides utilisés dans le procédé jusqu'à une température **TF** au plus égale à 170°C,
h3) production de vapeur fatale d'exportation pour alimenter un réseau de vapeur extérieur à partir d'eau déminéralisée par échanges de chaleur avec le gaz de synthèse et optionnellement avec les fumées, à une température **TV** supérieure à 200°C,
- le procédé P d'utilisation de chaleur étant **caractérisé en ce que** qu'il comprend au moins les étapes de :
a) mise à disposition d'un réseau d'eau de chauffage collectif dans lequel circule une eau à température variable comprise entre **Tt** température d'eau tiède, au moins égale à 50°C et **Tc** température d'eau chaude, au plus égale à 180°C,
b) mise à disposition de fluide caloporteur à température variable comprise entre **Tmin** supérieure à **Tt** et **Tmax** supérieure à **Tc** circulant dans une boucle fermée,
c) chauffage de tout ou partie du fluide caloporteur par échange de chaleur indirect avec le gaz de synthèse après le second refroidissement à la température **TG** lors de l'étape h1),
d) chauffage de tout ou partie du fluide caloporteur par échange de chaleur avec de la vapeur prélevée sur la vapeur d'exportation produite par l'étape h3) à la température **TV** de sorte à fournir un fluide caloporteur à la température **Tmax,**
e) transfert de chaleur du fluide caloporteur à la température **Tmax** vers le réseau d'eau de chauffage collectif par échange de chaleur indirect avec l'eau dudit réseau à la température **Tt** via un échangeur de sous-station de sorte à chauffer l'eau du réseau jusqu'à la température **Tc.**

2. Procédé selon la revendication 1 comprenant une étape de chauffage d'au moins une partie du fluide caloporteur par échange de chaleur indirect avec les fumées à la température **TF.**

3. Procédé selon l'une des revendications 1 ou 2 dans lequel le réseau d'eau chaude est un réseau de chauffage urbain, l'échangeur de sous-station transférant la chaleur depuis la boucle fermée vers l'eau du réseau urbain ou d'un sous-ensemble de ce réseau.

4. Procédé selon l'une des revendications précédentes dans lequel en cas d'arrêt du procédé PH2, la vapeur de l'étape (d) provient d'un réseau de vapeur relié au circuit de production de vapeur de l'installation.

5. Procédé selon l'une des revendications 1 à 4 dans lequel le fluide caloporteur est de l'eau.

6. Procédé selon l'une des revendications précédentes dans lequel le refroidissement du gaz de synthèse - en sortie du module de conversion - est assuré pour partie par un aéro-réfrigérant et pour partie par un échangeur à eau installé en amont ou en parallèle de l'aéro-réfrigérant et assurant le chauffage du fluide caloporteur selon l'étape c).

7. Procédé selon l'une quelconque des revendications précédentes **caractérisé en ce que** le fluide caloporteur circulant dans la boucle fermée est à une pression supérieure à la pression du gaz de synthèse mesurée à l'entrée de l'échangeur de chaleur de l'étape c).

8. Installation pour l'utilisation de chaleur disponible à une température inférieure à 170°C à partir d'une installation de production d'hydrogène par reformage à la vapeur d'hydrocarbures légers pour contribuer au chauffage de l'eau d'un réseau d'eau de chauffage collectif, dans lequel :
- l'installation de production d'hydrogène comprend au moins:
• un module de génération de gaz de synthèse par reformage à la vapeur avec production conjointe de fumées, ainsi que
• un module de refroidissement du gaz de synthèse par échange de chaleur,
• un module de conversion de CO contenu dans le gaz de synthèse,
• un second module de refroidissement par échange de chaleur jusqu'à une température **TG** au plus égale à 160°C,
• des échangeurs de chaleur pour le refroidissement des fumées par échanges de chaleur successifs avec différents fluides utilisés dans le procédé jusqu'à une température **TF** au plus égale à 170°C,
• une source d'eau déminéralisée pour la production de vapeur d'exportation pour l'alimentation d'un réseau de vapeur extérieur,
• des échangeurs de chaleur aptes à échanger de la chaleur avec le gaz de synthèse et avec les fumées pour la production de vapeur à une température **TV** supérieure à 200°C,
- ladite installation pour l'utilisation de chaleur comprenant au moins:
• un réseau d'eau de chauffage collectif dans lequel circule une eau à température variable comprise entre **Tt** température d'eau tiède, au moins égale à 50°C et **Tc** température d'eau chaude au plus égale à 180°C,
• une boucle fermée dans laquelle circule un fluide caloporteur à température variable comprise entre **Tmin** supérieure à **Tt** et **Tmax** supérieure à **Tc,**
• un échangeur de chaleur pour le chauffage de tout ou partie du fluide caloporteur par échange de chaleur indirect avec le gaz de synthèse à la température **TG,**
• un échangeur de chaleur pour le chauffage de tout ou partie du fluide caloporteur par échange de chaleur indirect avec de la vapeur prélevée sur la vapeur d'exportation de sorte à fournir un fluide caloporteur à la température **Tmax,**
• une sous station équipée d'un échangeur de chaleur indirect station pour le chauffage de l'eau du réseau d'eau de chauffage collectif jusqu'à la température **Tc** par échange de chaleur indirect avec le fluide caloporteur à la température **Tmax.**

9. Installation selon la revendication 8 comprenant en outre un échangeur de chaleur pour le chauffage d'au moins une partie du fluide caloporteur par échange de chaleur indirect avec les fumées à la température **TF.**

10. Installation selon l'une des revendications 8 ou 9 dans laquelle le réseau d'eau de chauffage collectif est un réseau de chauffage urbain, l'échangeur de sous-station transférant la chaleur depuis la boucle fermée vers l'eau du réseau urbain ou d'un sous-ensemble de ce réseau.

11. Installation selon l'une des revendications 8 à 10 équipée d'une canalisation et de moyens aptes assurer l'alimentation en vapeur de l'étape (d) à partir d'un réseau de vapeur relié au circuit de production de vapeur de l'installation de production d'hydrogène en cas d'arrêt de celle-ci.

12. Installation selon l'une des revendications 8 à 11 dans laquelle le fluide caloporteur circulant dans la boucle fermée est de l'eau.

13. Installation selon l'une des revendications 8 à 12 comprenant pour le refroidissement du gaz de synthèse en sortie du module de conversion un aeroréfrigérant et un échangeur à eau installé en amont ou en parallèle de l'aéroréfrigérant et assurant le chauffage du fluide caloporteur.

## Patentansprüche

1. Verfahren P zur Verwendung von Wärme, verfügbar mit einer Temperatur von weniger als 170 °C, die aus einem Verfahren PH2 zur Produktion von Wasserstoff durch Reformieren mit dem Dampf von leichten Kohlenwasserstoffen stammt, um zur Heizung des Wassers eines kollektiven Heizwassernetzes beizutragen, wobei:
- das Verfahren PH2 mindestens die folgenden Schritte umfasst:
h1) Herstellen eines Synthesegases durch Reformieren mit dem Dampf mit gleichzeitigem Produzieren von Rauch, gefolgt von einem ersten Abkühlen des Synthesegases durch Wärmeaustausch, dann einem Umwandeln des CO, das im Synthesegas enthalten ist, einem zweiten Abkühlen durch Wärmeaustausch bis auf eine Temperatur TG von höchstens gleich 160 °C,
h2) Abkühlen des Rauchs, erzeugt durch aufeinander folgende Wärmeaustausche mit verschiedenen Fluiden, die im Verfahren verwendet werden, bis auf eine Temperatur TF von höchstens gleich 170 °C,
h3) Produzieren eines ungenutzten Exportdampfes, um ein äußeres Dampfnetz auf der Grundlage von entmineralisiertem Wasser durch Wämeaustausche mit dem Synthesegas und optional mit dem Rauch bei einer Temperatur TV von mehr als 200 °C zu versorgen,
- wobei das Verfahren P zur Verwendung von Wärme **dadurch gekennzeichnet ist, dass** es mindestens die folgenden Schritte umfasst:
a) Bereitstellen eines kollektiven Heizwassernetzes, in dem Wasser mit einer variablen Temperatur zirkuliert, die zwischen Tt, der Temperatur von lauwarmem Wasser, mindestens gleich 50 °C, und Tc, der Temperatur von heißem Wasser, höchstens gleich 180 °C, liegt,
b) Bereitstellen von Wärmeträgerfluid mit einer variablen Temperatur, die zwischen Tmin, höher als Tt, und Tmax, höher als Tc, liegt, das in einer geschlossenen Schleife zirkuliert,
c) Heizen der Gesamtheit oder eines Teils des Wärmeträgerfluids durch indirekten Wärmeaustausch mit dem Synthesegas nach dem zweiten Abkühlen auf die Temperatur TG bei Schritt h1),
d) Heizen der Gesamtheit oder eines Teils des Wärmeträgerfluids durch Wärmeaustausch mit dem Dampf, der vom Exportdampf entnommen wird, der von Schritt h3) mit der Temperatur TV produziert wird, um ein Wärmeträgerfluid mit der Temperatur Tmax zu liefern,
e) Übertragen von Wärme des Wärmeträgerfluids mit der Temperatur Tmax auf das kollektive Heizwassernetz durch indirekten Wärmaustausch mit dem Wasser des Netzes mit einer Temperatur Tt über einen Unterstations-Wärmeaustauscher, um das Wasser des Netzes auf eine Temperatur Tc zu heizen.

2. Verfahren nach Anspruch 1, umfassend einen Schritt des Heizens von mindestens einem Teil des Wärmeträgerfluids durch indirekten Wärmeaustausch mit dem Rauch auf die Temperatur TF.

3. Verfahren nach einem der Ansprüche 1 oder 2, wobei das Warmwassernetz ein städtisches Heizungsnetz ist, wobei der Unterstations-Austauscher Wärme von der geschlossenen Schleife zum Wasser des städtischen Netzes oder einer Untereinheit dieses Netzes überträgt.

4. Verfahren nach einem der vorhergehenden Ansprüche, wobei im Fall des Stopps von Verfahren PH2 der Dampf von Schritt (d) aus einem Dampfnetz stammt, das mit dem Kreis zur Produktion von Dampf der Anlage verbunden ist.

5. Verfahren nach einem der Ansprüche 1 bis 4, wobei das Wärmeträgerfluid Wasser ist.

6. Verfahren nach einem der vorhergehenden Ansprüche, wobei das Abkühlen des Synthesegases - am Ausgang des Umwandlungsmoduls - teilweise durch einen Luftkühler und teilweise durch einen Wasseraustauscher sichergestellt wird, der vorgelagert vom oder parallel zum Luftkühler installiert ist und die Heizung des Wärmeträgerfluids gemäß Schritt c) sicherstellt.

7. Verfahren nach einem der vorhergehenden Ansprüche, **dadurch gekennzeichnet, dass** das Wärmeträgerfluid, das in der geschlossenen Schleife zirkuliert, einen höheren Druck als den Druck des Synthesegases aufweist, gemessen am Eingang des Wärmeaustauschers von Schritt c).

8. Anlage zur Verwendung von Wärme, verfügbar mit einer Temperatur von weniger als 170 °C, aus einer Anlage zur Produktion von Wasserstoff durch Reformieren mit dem Dampf von leichten Kohlenwasserstoffen, um zur Heizung des Wassers eines kollektiven Heizwassernetzes beizutragen, wobei:
- die Anlage zur Produktion von Wasserstoff mindestens Folgendes umfasst:
-- ein Modul zur Herstellung von Synthesegas durch Reformieren mit dem Dampf mit gleichzeitiger Produktion von Rauch, ebenso wie
-- ein Modul zur Abkühlung des Synthesegases durch Wärmeaustausch,
-- ein Modul zur Umwandlung von CO, das im Synthesegas enthalten ist,
-- ein zweites Modul zur Abkühlung durch Wärmeaustausch bis auf eine Temperatur TG von höchstens gleich 160 °C,
-- Wärmeaustauscher zur Abkühlung des Rauchs durch aufeinander folgende Wärmeaustauscher mit verschiedenen Fluiden, die im Verfahren verwendet werden, bis auf eine Temperatur TF von höchstens gleich 170 °C,
-- eine Quelle von entmineralisiertem Wasser für die Produktion von Exportdampf für die Versorgung eines äußeren Dampfnetzes,
-- Wärmeaustauscher, die ausgelegt sind, um Wärme mit dem Synthesegas und mit dem Rauch für die Produktion von Dampf mit einer Temperatur TV von mehr als 200 °C auszutauschen,
- die Anlage zur Verwendung von Wärme mindestens Folgendes umfasst:
-- ein kollektives Heizwassernetz, in dem Wasser mit einer variablen Temperatur zirkuliert, die zwischen Tt, der Temperatur von lauwarmem Wasser, mindestens gleich 50 °C, und Tc, der Temperatur von heißem Wasser, höchstens gleich 180 °C, liegt,
-- eine geschlossene Schleife, in der ein Wärmeträgerfluid mit einer variablen Temperatur zirkuliert, die zwischen Tmin, höher als Tt, und Tmax, höher als Tc, liegt,
-- einen Wärmetauscher zur Heizung der Gesamtheit oder eines Teils des Wärmeträgerfluids durch indirekten Wärmeaustausch mit dem Synthesegas mit einer Temperatur TG,
-- eine Wärmeaustauscher zur Heizung der Gesamtheit oder eines Teils des Wärmeträgerfluids durch indirekten Wärmeaustausch mit Dampf, der vom Exportdampf entnommen wird, um ein Wärmeträgerfluid mit der Temperatur Tmax zu liefern,
-- eine Unterstation, ausgestattet mit einem indirekten Wärmeaustauscher, einer Station für die Heizung des Wassers des kollektiven Heizwassernetzes auf eine Temperatur Tc durch indirekten Wärmeaustausch mit dem Wärmeträgerfluid auf der Temperatur Tmax.

9. Anlage nach Anspruch 8, umfassend außerdem einen Wärmeaustauscher für die Heizung von mindestens einem Teil des Wärmeträgerfluids durch indirekten Wärmeaustausch mit dem Rauch auf die der Temperatur TF.

10. Anlage nach einem der Ansprüche 8 oder 9, wobei das kollektive Heizwassernetz ein städtisches Heiznetz ist, wobei der Austauscher der Unterstation die Wärme von der geschlossenen Schleife zum Wasser des städtischen Wassernetzes oder einer Untereinheit dieses Netzes überträgt.

11. Anlage nach einem der Ansprüche 8 bis 10, ausgestattet mit einem Kanal und Mitteln, die ausgelegt sind, um die Versorgung mit Dampf des Schritts (d) von einem Dampfnetz sicherzustellen, das mit dem Kreis zur Produktion von Dampf der Anlage zur Produktion von Wasserstoff im Fall eines Stopps dieser verbunden ist.

12. Anlage nach einem der Ansprüche 8 bis 11, wobei das Wärmeträgerfluid, das in der geschlossenen Schleife zirkuliert, Wasser ist.

13. Anlage nach einem der Ansprüche 8 bis 12, umfassend zur Abkühlung des Synthesegases am Ausgang des Umwandlungsmoduls einen Luftkühler und einen Wassertauscher, der vorgelagert vom oder parallel zum Luftkühler installiert ist und die Heizung des Wärmeträgerfluids sicherstellt.

## Claims

1. Method P for using heat available at a temperature of less than 170°C originating from a method PH2 for producing hydrogen by steam reforming of light hydrocarbons to contribute to heating the water of a district heating water network, wherein:
- the method PH2 includes at least the following steps:
-- h1) generation of a syngas by steam reforming with the combined production of fumes, followed by a first cooling of the syngas by heat exchange, then conversion of the CO contained in the syngas, and a second cooling operation by heat exchange to reach a temperature TG at most equal to 160°C,
-- h2) cooling of the fumes produced by successive heat exchanges with different fluids used in the method to reach a temperature TF at most equal to 170°C,
-- h3) production of unavoidable export steam to feed an external steam network using demineralised water by heat exchanges with the syngas and optionally with the fumes, at a temperature TV greater than 200°C,
- the method P for using heat being **characterised in that** it includes at least the following steps:
-- a) provision of a district heating water network wherein water circulates at a variable temperature of between Tt warm water temperature, at least equal to 50°C and Tc hot water temperature, at most equal to 180°C,
-- b) provision of heat transfer fluid at a variable temperature of between Tmin greater than Tt and Tmax greater than Tc circulating in a closed loop,
-- c) heating of all or part of the heat transfer fluid by indirect heat exchange with the syngas after the second cooling operation at the temperature TG in step h1),
-- d) heating of all or part of the heat transfer fluid by heat exchange with the steam removed from the export steam produced in step h3) at the temperature TV so as to provide a heat transfer fluid at the temperature Tmax,
-- e) transfer of heat from the heat transfer fluid at the temperature Tmax to the district heating water network by indirect heat exchange with the water of said network at the temperature Tt via a substation heat exchanger so as to heat the water of the network to the temperature Tc.

2. Method according to claim 1 including a step for heating at least one portion of the heat transfer fluid by indirect heat exchange with the fumes at the temperature TF.

3. Method according to one of claims 1 or 2, wherein the hot water network is a district heating network, the substation heat exchanger transferring the heat from the closed loop to the water of the district network or to the water of a sub-assembly of this network.

4. Method according to one of the previous claims, wherein, in the event that the method PH2 is stopped, the steam from step (d) originates from a steam network connected to the steam production circuit of the facility.

5. Method according to one of claims 1 to 4, wherein the heat transfer fluid is water.

6. Method according to one of the previous claims, wherein the cooling of the syngas - at the outlet of the conversion module - takes place in part by a cooling tower and in part by a water exchanger installed upstream or in parallel to the cooling tower and heating the heat transfer fluid according to step c).

7. Method according to any one of the previous claims, **characterised in that** the heat transfer fluid circulating in the closed loop has a pressure greater than the pressure of the syngas measured at the inlet of the heat exchanger in step c).

8. Facility for using heat available at a temperature of less than 170°C from a facility for producing hydrogen by steam reforming of light hydrocarbons to contribute to heating the water of a district heating water network, wherein:
- the facility for producing hydrogen includes at least:
-- a module for generating syngas by steam reforming with the combined production of fumes, as well as
-- a module for cooling the syngas by heat exchange,
-- a module for converting the CO contained in the syngas,
-- a second module for cooling by heat exchange to reach a temperature TG at most equal to 160°C,
-- heat exchangers for cooling the fumes produced by successive heat exchanges with different fluids used in the method to reach a temperature TF at most equal to 170°C,
-- a source of demineralised water for producing export steam to feed an external steam network,
-- heat exchangers capable of exchanging heat with the syngas and with the fumes to produce steam at a temperature TV greater than 200°C,
- said facility for using heat including at least:
-- a district heating water network wherein water circulates at a variable temperature of between Tt warm water temperature, at least equal to 50°C and Tc hot water temperature, at most equal to 180°C,
-- a closed loop wherein a heat transfer fluid circulates at a variable temperature of between Tmin greater than Tt and Tmax greater than Tc,
-- a heat exchanger for heating all or part of the heat transfer fluid by indirect heat exchange with the syngas at the temperature TG,
-- a heat exchanger for heating all or part of the heat transfer fluid by indirect heat exchange with the steam removed from the export steam so as to provide a heat transfer fluid at the temperature Tmax,
-- a substation equipped with a station indirect heat exchanger for heating the water of the district heating water network to reach the temperature Tc by indirect heat exchange with the heat transfer fluid at the temperature Tmax.

9. Facility according to claim 8, further comprising a heat exchanger for heating at least one portion of the heat transfer fluid by indirect heat exchange with the fumes at the temperature TF.

10. Facility according to one of claims 8 or 9, wherein the district heating water network is a district heating network, the substation heat exchanger transferring the heat from the closed loop to the water of the district network or to the water of a sub-assembly of this network.

11. Facility according to one of claims 8 to 10, equipped with a line and means capable of ensuring the supply of steam in step (d) from a steam network connected to the steam production circuit of the facility for producing hydrogen in case of shut down of the facility.

12. Facility according to one of claims 8 to 11, wherein the heat transfer fluid circulating in the closed loop is water.

13. Facility according to one of claims 8 to 12, comprising, for cooling the syngas at the outlet of the conversion module, a cooling tower and a water exchanger installed upstream or in parallel to the cooling tower and heating the heat transfer fluid.
